# EUROPEAN PATENT SPECIFICATION

(11) **EP 1 946 534 B1**
(45) Date of publication and mention of the grant of the patent: **16.03.2016**
(21) Application number: 06826548.7
(22) Date of filing: 25.10.2006
(51) Int. Cl.: H04M 3/42, H04M 3/00, H04M 5/00, H04Q 3/00

(54) **METHODS, SYSTEMS, AND COMPUTER PROGRAM PRODUCTS FOR USING A PRESENCE DATABASE TO DELIVER ENHANCED PRESENCE INFORMATION REGARDING COMMUNICATIONS MADE TO OR FROM A PRESENTITY**
VERFAHREN, SYSTEME UND COMPUTERPROGRAMMPRODUKTE ZUR VERWENDUNG EINER PRÄSENZDATENBANK ZUM ABLIEFERN VON ERWEITERTEN PRÄSENZINFORMATIONEN IN BEZUG AUF EINEN ZU ODER VON EINER PRÄSENTITÄT ERFOLGTEN KOMMUNIKATION
METHODES, SYSTEMES, ET PRODUITS DE PROGRAMME INFORMATIQUE DESTINES A UTILISER UNE BASE DE DONNEES DE PRESENCE POUR FOURNIR DES INFORMATIONS DE PRESENCE AMELIOREES CONCERNANT DES COMMUNICATIONS ENTRANT ET SORTANT D'UN SERVICE DE PRESENCE

(30) Priority: 25.10.2005 US 729995 P
(43) Date of publication of application: 23.07.2008
(73) Proprietor: Tekelec, Inc., Morrisville, NC 27560 (US)
(72) Inventor: KHADRI, Sectharaman, Cary, NC 27519 (US)
(74) Representative: Gill Jennings & Every LLP
(86) International application number: PCT/US2006/041451
(87) International publication number: WO 2007/050591

(56) References cited:
- JP-A- 2005 057 709
- US-A1- 2004 015 569
- US-A1- 2004 062 383

## Description

### RELATED APPLICATIONS

This application claims the benefit of U.S. Provisional Patent Application Serial No. 60/729,995, filed October 25, 2005.

### TECHNICAL FIELD

The subject matter described herein relates to methods, systems, and computer program products for providing presence services. More particularly, the subject matter described herein relates to methods, systems, and computer program products for using a presence database to deliver enhanced presence information regarding communications made to or from a presentity.

### BACKGROUND

In telecommunications, presence information is information regarding an end user's or entity's connection to a network. Presence information can include an end user's location, connection status, directory address, etc. An end user's connection status can indicate the ability and willingness of an end user to communicate. Presence information may be stored by a presence server and delivered to authorized subscribers. Presence information has been applied to the Internet technology known as instant messaging (IM).

There are currently models for distributing and collecting presence information within the scope of an Internet protocol / data network environment. The ability to track the presence information of Internet users has been fairly well developed and widely published. However, as communication networking technology has continued to evolve at a rapid pace, so have the means by which end users or subscribers can communicate. More particularly, the explosive growth of hand-held, wireless communication terminals, such as mobile phones, wireless web phones, and personal digital assistants, has led to a demand for inter-networking or inter-medium communication solutions. In other words, it is rapidly becoming useful for a subscriber to have his or her wireless phone status or "presence" known to other subscribers, where these other subscribers may be using a variety of communication mediums, such as wireless phone service, wired phone service, short message service (SMS), or Internet service. In one example, it would be desirable for a subscriber to be able to obtain information regarding communications, such as phone call communications, made to or from a subscribed-to entity, referred to as a presentity.

Presence service uses a subscription model where subscribers desiring to receive presence information regarding another subscriber (the presentity) subscribe to receive updates to the presentity's presence information with a presence server. After a successful subscription, the presence server automatically delivers updates in the presentity's presence information to subscribed entities, also referred to as watchers. However, conventional presence information that is delivered to watchers has been limited to the presentity's current communication status, e.g., whether the presentity is connected to the network and available to receive instant messages.

Current presence servers do not provide additional information, such as call logs, parties involved in calls, or whether a call to a presentity was completed. Such information may be useful, for example, if the presentity is a child and the watcher is a parent or guardian.

Accordingly, there exists a need for improved methods, systems, and computer program products for delivering enhanced presence information regarding communications made to or from a presentity.

JP 2005 057709 A (SONY CORP) 3 March 2005 (2005-03-03) discloses a system providing a call log used to complement presence information in order to predict the presentity's future availability.

US 2004/062383 A1 (SYLVAIN) 1 April 2004 (2004-04-01) discloses background information.

### SUMMARY

According to a first aspect of the invention, there is provided a method as set out in claim 1.

According to a second aspect of the invention, there is provided a system as set out in claim 6.

According to a third aspect of the invention, there is provided a computer program product as set out in claim 11.

As used herein, the term "presentity" refers to a communications end user or entity for which presence information and/or enhanced presence information may be maintained. The term "presence information" refers to information regarding a presentity's connection status, such as whether the user is connected to a network and available to receive communications or not. The term "enhanced presence information" refers to information in addition to network connection status of a presentity, such as parities with which the presentity is or has communicated, a log of calls or other modes of communications involving the presentity, and indications as to whether the calls or other modes of communications were successful.

Exemplary computer readable media suitable for implementing the subject matter described herein include disk memory devices, chip memory devices, application specific integrated circuits, programmable logic devices, and downloadable electrical signals. In addition, a computer program product that implements the subject matter described herein may be located on a single device or computing platform. Alternatively, the subject matter described herein can be implemented on a computer program product that is distributed across multiple devices or computing platforms.

### BRIEF DESCRIPTION OF THE DRAWINGS

Exemplary embodiments of the subject matter will now be explained with reference to the accompanying drawings, of which:
Figure 1 is a block diagram of an example of a telecommunications system for using a presence database to deliver enhanced presence information regarding communications made to or from a presentity according to an embodiment of the subject matter described herein;
Figure 2 is a flow chart of an exemplary process for using a presence database to deliver enhanced presence information regarding communications made to or from a presentity according to an embodiment of the subject matter described herein;
Figure 3 is a block diagram of exemplary internal architectures of a network node and a presence server according to an embodiment of the subject matter described herein;
Figures 4A and 4B are a flow chart of an exemplary process for using the network node shown in Figure 3 for providing enhanced presence information to a presence server database in accordance with an embodiment of the subject matter described herein;
Figure 5 is a block diagram of an exemplary internal architecture of a network node having a resident presence database system for storing enhanced presence information according to an embodiment of the subject matter described herein; and
Figure 6 is a block diagram of an example of a telecommunications system for using a presence database to deliver enhanced presence information regarding communications made to or from a presentity based on information in a SIP message according to an embodiment of the subject matter described herein.

### DETAILED DESCRIPTION

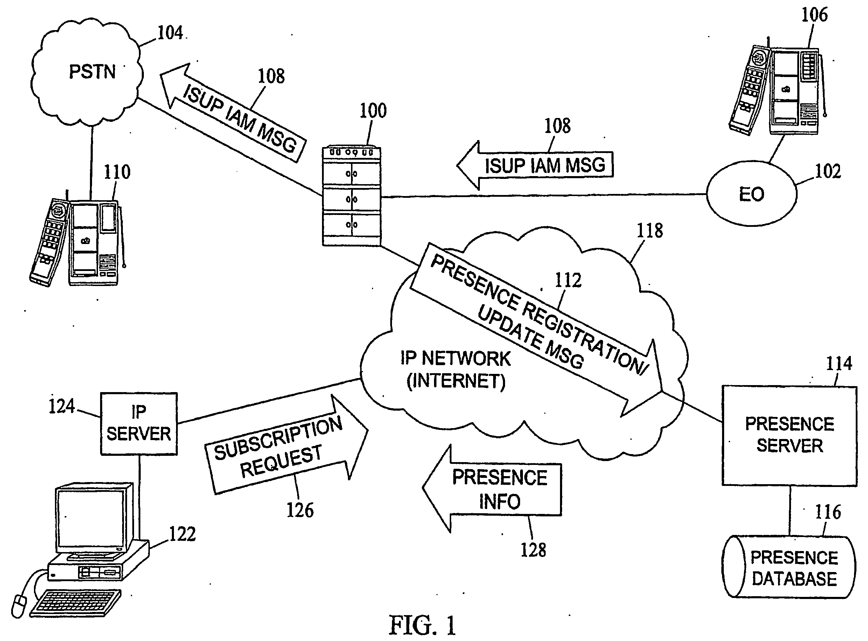

A telecommunications system for using a presence database to deliver enhanced presence information regarding communications made to or from a presentity may be implemented as hardware, software, and/or firmware components executing on one or more components of a network. Figure 1 illustrates an example of a telecommunications system for using a presence database to deliver enhanced presence information regarding communications made to or from a presentity according to an embodiment of the subject matter described herein. Referring to Figure 1, the system may include a signaling network node **100** operable to communicate or route signaling messages between an end office (EO) **102** and a public switched telephone network (PSTN) **104**. For example, network node **100** may be a signaling system 7 (SS7) / Internet protocol (IP) routing node. Network node **100** may be operable to obtain enhanced presence information regarding parties involved in communications made to or from a presentity and send the information to a presence database for storage. The information stored in the presence database may be made available to authorized subscribers who subscribe to the presentity. For example, the subscribers may be the parents or guardians of the presentity, and the enhanced presence information may include a call log of calls involving the presentity via one or more communications devices used by the presentity. Table 1 shown below illustrates exemplary enhanced presence information that may be called for and delivered to watchers of a presentity.

**Table 1: Enhanced Presence Information**

| **Called Directory Number (DN)** | **Calling DN** | **Caller ID Information** | **Call Completed ?** | **Timers** |
|---|---|---|---|---|
| 9193803814 | 9194938000 | Greg Jones | Y | 0900-0910, 10-06-06 |
| 9193803814 | 8188807919 | Ron Smith | Y | 1000-1010, 10-06-06 |
| 3803814@Tekelec.co m | 8665199000 | Henry Jackson | Y | 1100-1110, 10-6-06 |
| 9198188800 | 9193803814 | Not available | Y | 1200-1210, 10-6-06 |

In Table 1, the enhanced presence information that may be collected includes called party directory number information, calling party directory number information, caller ID information, if available, call completion information, and time information associated with each call. In the illustrated example, it is assumed that the presentity has two identities, 9193803814 and 3803814@Tekelec.com, depending whether the presentity is using a landline phone or a web phone. In the first three entries in the table, the presentity is being called by other entities. In the last entry in the table, the presentity is calling another party. If caller ID information is available, the network node **100** or presence server **115** may collect this information, for example, by querying a CNAM database. In addition, call completion and duration information may be obtained based on call signaling messages, such as ISUP messages or SIP messages associated with the call. Methods for obtaining the enhanced presence information based on call signaling information associated with a call be described in more detail below.

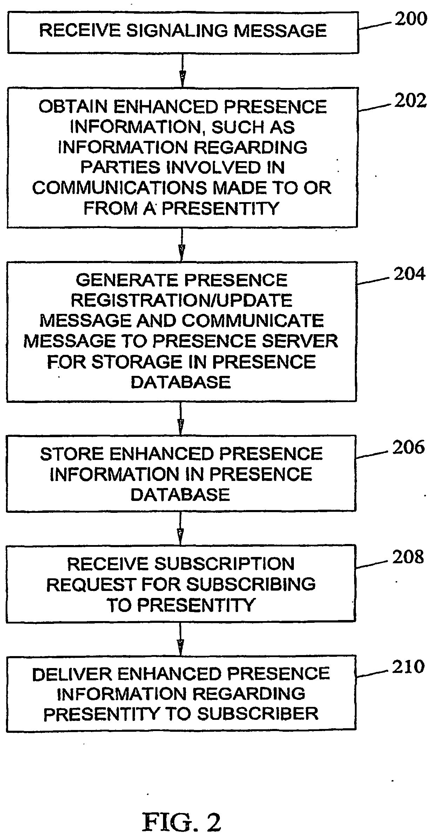

Figure 2 is a flow chart illustrating an exemplary process for using a presence database to obtain and deliver enhanced presence information regarding communications made to or from a presentity according to an embodiment of the subject matter described herein. The flow chart in Figure 2 will be used in combination with the signaling messages in Figure 1 to illustrate the obtaining and delivering of enhanced presence information. In this example, it is assumed that the presentity is initiating a phone call from a wireline phone **106**. Wireline phone **106** may be connected to end office **102**. Network node **100** may receive an SS7 ISDN user part (ISUP) IAM signaling message **108** from end office **102** (block 200). Those skilled in the art of SS7 signaling will appreciate that an ISUP IAM signaling message is the first in a sequence of ISUP formatted SS7 call control signaling messages that are required to complete a phone call in the PSTN. In this example, IAM signaling message **108** is generated by end office **102** in response to initiation of the phone call from phone **106.** Message **108** is communicated to network node **100** for establishing a call with a wireline phone **110** connected to PSTN 104. Message **108** may include calling and called party identifier information. For example, the calling and called party identifiers may be numbers associated with phones **106** and **110**, respectively.

In block **202**, network node **100** may obtain enhanced presence information, such as regarding parties involved in communications made to or from a presentity (block **202**). In one example, network node **100** may be operable to determine that the calling party number in message **108** is associated with the presentity. For example, network node **100** may store a list of numbers associated with presentities. Thus, based on the calling party identifier information, network node **100** can determine that IAM signaling message **108** is associated with a communication made to or from the presentity. In another example, network node **100** may determine that the message is an IAM signaling message for setting up a call, and may extract the called and calling party identifier information from the message in response to the determination. Network node **100** may also associate a date/time stamp with the called and/or calling party identifier information for identifying the date and time of the call.

In block **204**, network node **100** may generate presence registration or update message **112** including the enhanced presence information, such as the called and/or calling party identifier information and associated date/time stamp and communicate message **112** to a presence server **114** for storage in presence database **116**. Message **112** may be a SIP message communicated via IP network **118**. Presence server **114** may receive message **112** and store the enhanced presence information, such as the called and/or calling party identifier information and associated date/time stamp, in presence database **116** (block **206**). In one example, the party identifier information and date/time stamp may be stored in presence database **116** in a call log entry for the presentity. On receiving enhanced presence information in a registration message, presence server **114** may generate a new call log entry for the presentity. Alternatively, on receiving presentity information in an update message, presence server **112** may update an existing entry for the presentity in a call log.

Other enhanced presence information that may be stored in presence server **114** includes information regarding re-direction of a call involving the presentity and information regarding forwarding of a call involving the presentity. Those skilled in the art of network signaling will appreciate that one or more signaling messages may be examined to determine the re-direction or forwarding of a call. For example, an ISUP IAM or SIP re-INVITE message may include call redirection or forwarding information that may be collected by network node **100** and delivered to presence server **114**. Network node **100** may be operable to determine the re-direction or forwarding of a call associated with a presentity. In response to determining the call re-direction or the call forwarding, network node **100** may generate a presence or update message indicating call re-direction or call forwarding associated with a presentity's phone number and communicate the message to presentity server **114** for storage of the information in presence database **116**.

In block **208**, presence server **114** may receive a subscription request from a subscriber for subscribing to the presentity. For example, a subscriber may input information into a computer **122** for requesting presence information associated with the presentity. Computer **122** may generate a message identifying the presentity and communicate the message to an IP server **124** for obtaining the presence information associated with the presentity. In response to receiving the message, IP server **124** may generate a SIP subscribe message **126** for the subscriber for subscribing to the presentity. Presence server **114** may receive SIP subscribe message **126** identifying presentity. Presentity may be identified in message **126** by a party identifier, such as a phone number. Other suitable SIP-type messages or other suitable protocols may be used to convey the subscription request.

In response to receiving SIP subscribe message **126**, and successful authentication of the subscriber, presence server **114** may retrieve enhanced presence information for the presentity identified in the message and deliver the enhanced presence information to the subscriber (block **210**). For example, presence server **114** may retrieve the enhanced presence information from presence database **116**. Further, presence server **114** may generate a SIP notify message **128** including the enhanced presence information and communicate the message to IP server **124**. In one example, the enhanced presence information may be stored in an XML-encoded format within the SIP notify message for conveying the presence information. IP server **124** may communicate the presence information to computer **122** associated with the subscriber. Computer **122** may present or display the enhanced presence information to the subscriber. The subject matter described herein may provide for the real-time or near real-time observation of the communication activity of a presentity. In one example, a parent subscriber may obtain enhanced presence information associated with a child. Other suitable SIP-type messages or other suitable protocols may be used to convey the enhanced presence information.

In one embodiment, enhanced presence information updates are automatically communicated to a subscriber who successfully subscribes to a presentity. For example, when presence server **114** receives updated enhanced presence information, presence server **114** may automatically communicate the updated enhanced presence information to the subscriber at computer **122**. The updated enhanced presence information can be sent in response to changes to information previously sent to the subscriber.

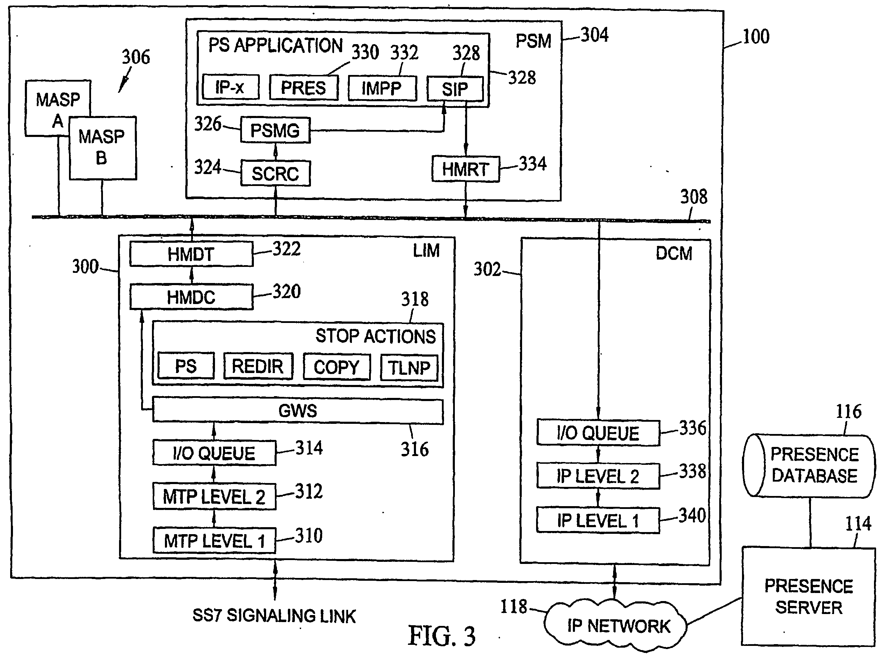

Figure 3 is a block diagram illustrating exemplary internal architectures of network node **100** and presence server **112** according to an embodiment of the subject matter described herein. In this example, network node **100** is an SS7/IP routing node, which may include SS7 signal transfer point (STP) functionality, SS7/IP gateway functionality, and/or IP routing functionality. Referring to Figure 3, network node **100** includes a plurality of internal processing modules or cards **300**, **302**, **304**, and a pair of maintenance and administration subsystem processors (MASPs) **306** connected to each other via a high speed interprocessor message transport (IMT) bus **308**. Processing modules **300**, **302**, **304**, and **306** may each include an application processor and associated memory for implementing a telecommunications signaling function. In addition, each processing module may include a communications processor for communicating with other processing modules via bus **308**.

MASP pair **306** implements maintenance and administration subsystem functions. As MASP pair **306** are not particularly relevant to a discussion of presence processing according to the subject matter described herein, a detailed discussion of their function is not provided herein.

Processing module **300** comprises a link interface module (LIM) for interfacing with SS7 signaling links. LIM **300** may include an SS7 MTP level 1 function **310**, an SS7 MTP level 2 function **312**, an I/O buffer or queue **314**, a gateway screening (GWS) function **316**, a presence service request (PSR) stop action function **318**, an SS7 MTP level 3 message handling and discrimination (HMDC) function **320**, and a message handling and distribution (HMDT) function **322**. MTP level 1 and 2 functions **310** and **312**, respectively, provide the facilities for sending and receiving digital data over a particular physical media / physical interface, as well as to provide error detection / correction and sequenced delivery of all SS7 messages. I/O queue **314** provides for temporary buffering of incoming and outgoing signaling messages. GWS function **316** is responsible for examining the incoming signaling messages and determining which, if any, of the provisioned stop actions are applicable. PSR stop action function **318** is responsible for examining received messages and determining whether the messages are associated with a presentity. In response to determining that a received message is associated with a presentity, PSR stop action function **318** may generate a copy of the message, and subsequently encapsulate the message within an SS7 signaling connection control part (SCCP) formatted message. It should be appreciated that PSR stop action function **318** can also be configured to encapsulate the original incoming signaling message, without making a copy. HMDC **320** receives signaling messages from the lower processing layers and performs a discrimination function, effectively determining whether an incoming SS7 message requires internal processing or is simply to be through switched. For instance, in the case of an SS7 signaling message associated with a call involving a presentity or an SCCP encapsulated ISUP IAM message, HMDC **320** would determine that the message should be internally routed for further processing. HMDT **322** manages or directs the internal routing of SS7 messages that require additional processing prior to final routing. It should be appreciated that a LIM card may contain more functional processes than those described above.

In one example, PSR stop action function **318** may determine whether a received ISUP IAM signaling message includes information regarding parties involved in communications made to or from a presentity. In one example, PSR stop action function **318** may examine the identifier information in the source address and the destination address of the message for determining whether the message is being sent to or received from a presentity. If it is determined that the message is associated with a presentity, copy function **323** may copy and encapsulate the message, and forward the message copy to module **304** for further processing. Messages that are not associated with a presentity may be forwarded to other modules of network node **100** for processing prior to final routing.

Module **304** comprises a presence service module (PSM) including a database and database control processes for generating presence registration / update messages and for routing the messages to a presence database. In the illustrated example, module **304** includes an SCCP subsystem controller known as a signaling connection routing controller (SCRC) process **324**, a presence service manager (PSMG) **326**, and a number of presence server functions. Included among the presence server functions is a SIP registration / update function **328**, for generating SIP messages, forwarding the SIP messages to presence server **112**, and processing SIP messages received from presence server **112**. The format for SIP messages is described in detail in RFC 2543, "SIP: Session Initiation Protocol" (March 1999), the disclosure of which is incorporated herein by reference in its entirety.

Presence protocol function **330** may also be included for communicating with a presence server. For example, function **330** may communicate with a presence server using the messages described in accordance with the proposed presence protocol found in "The Presence Protocol," internet-draft-saraswat-presenceprotocol-00.txt, February 26, 1999, the disclosure of which is incorporated herein by reference in its entirety.

Instant messaging and presence protocol (IMPP) function **332** may also be included for communicating with a presence server according to the IMPP protocol. The IMPP protocol is described in detail in one or more of the following IETF Internet draft documents:
"Message Information Data Format," <draft-ietf-impp-midf-01.txt>, January 19, 2000;
"Presence Information Data Format for IMPP," <draft-ietf-impp-pidf 01.txt>, March 10, 2000; and
"Transport Protocol for Presence Information / Instant Messaging," <draft-ietf-impp-pitp-mitp-01.txt>, March 9, 2000,
the disclosures of each of which are incorporated herein by reference in their entireties.

The subject matter described herein is not limited to communicating with a presence server using SIP, IMPP, or presence protocols. Any suitable protocol for communicating with a presence server is within the scope of the subject matter described herein.

SCRC function **324** is responsible for discrimination of signaling messages at the SCCP level and for distributing the signaling messages to an appropriate higher processing level application or function. In the configuration shown in Figure 3, the next highest processing level is represented by PSMG **326**. PSMG **326** is responsible for determining how to process the incoming message. For example, if the message contains an SCCP-encapsulated ISUP IAM message, PSMG **326** may extract enhanced presence information involving a presentity. As will be appreciated from Figure 3, a number of presence services functions may be simultaneously provisioned on a single PSM card. These presence server functions may be configured such that each function is capable of generating presence registration / update messages that are formatted in different protocols including, but not limited to, SIP, IMPP, and presence protocol.

While any of the above-described presence registration applications may be provisioned on a single PSM card, SIP registration / update application function **328** is used in the examples described herein to illustrate the functionality of the node in registering or updating presence information in a presence database. SIP registration / update application function **328** essentially contains the logic necessary to process the incoming SS7 message and construct the appropriate SIP-formatted presence registration / update message including information regarding parties involved in communications made to or from a presentity. The messages generated by SIP registration / update application function **328** may be forwarded to DCM **302**. An HMRT process **334** may receive the messages generated by function **328** and determine to which DCM card the messages should be routed for subsequent outbound transmission. In this case, the HMRT function **334** determines that the desired outbound signaling link associated with the routing of the message is located on DCM **302**.

DCM **302** may receive messages from process **328** for out-bound communication to presence server **114** via IP network **118**. DCM **302** includes an I/O queue **334** and IP level 1 and 2 processes **336** and **338**, respectively. I/O queue **334** facilitates temporary buffering of incoming and outgoing signaling messages, while IP addressing operations are performed by IP level 1 and 2 processes **336** and **338**. The messages may be communicated to presence server **114**, which may store presence information in presence database **116**.

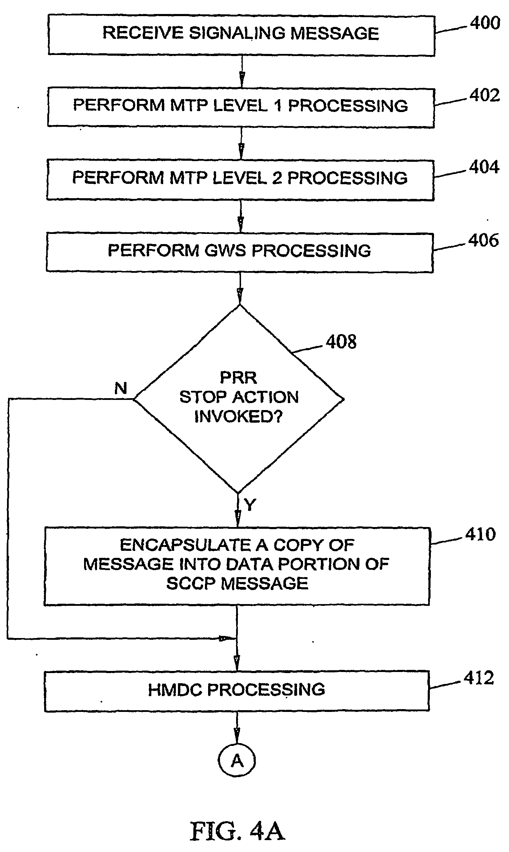

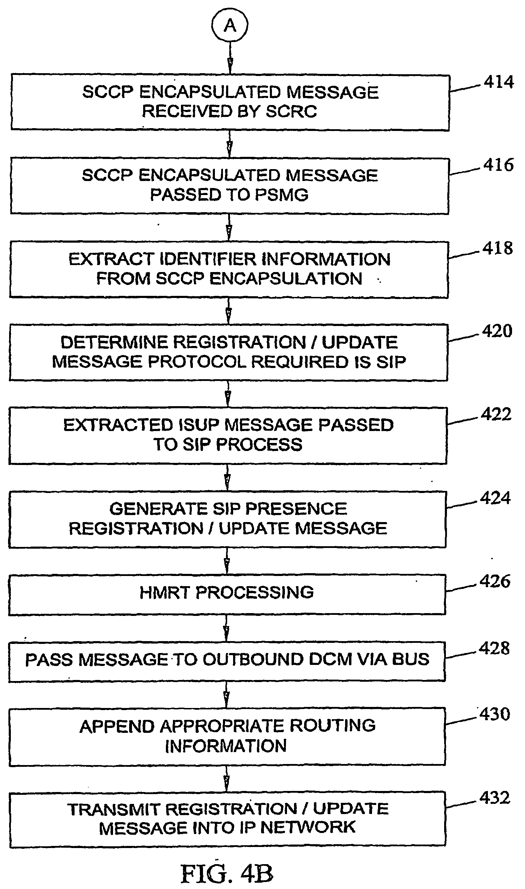

Figures 4A and 4B are a flow chart illustrating an exemplary process for using network node **100** shown in Figure 3 for providing enhanced presence information to a presence server database in accordance with an embodiment of the subject matter described herein. Referring to Figure 4A, in block **400**, an incoming ISUP IAM signaling message is received at inbound LIM **300**. In blocks **402** and **404**, the incoming ISUP IAM signaling message is received and processed by MTP level 1 and 2 functions **310** and **312**, respectively. With MTP level 1 and 2 processing complete, the signaling message is temporarily buffered in I/O queue **314** before being passed up to GWS function **316**. As indicated in block **406**, GWS function **316** examines the incoming ISUP IAM signaling message and determines not only whether the message is to be allowed into the node for further processing, but also which, if any, of the provisioned stop actions are applicable to the incoming message. In this example, GWS function **316** examines the incoming ISUP IAM signaling message and determines that the message is permitted to enter the node. Further, upon examination of the originating point code (OPC), destination point code (DPC), and service indicator octet (SIO) fields contained in the MTP routing layer, it is determined that the message requires additional processing by PSR stop action function **318** (block **408**).

In block **410**, PSR stop action function **318** receives the ISUP IAM signaling message from GWS function **316** and determines that the incoming message is an ISUP IAM type message. PSR stop action function **318** next checks the DPC of the incoming message to verify that the DPC of the incoming message is a valid PC. PSR stop action function **318** examines the identifier information in the source address and the destination address of the message for determining whether the message is involved in communications made to or from a presentity. If the incoming message is identified as being involved in communications made to or from a presentity, process **318** encapsulates a copy of the ISUP IAM message within an SCCP formatted message, as indicated in block **410**. Such SCCP encapsulation is effectively achieved by adding essential SCCP message leading and trailing bit sequences to the base bit sequence that comprises the ISUP IAM message. Thus, an SCCP type encapsulated message is created which envelops or contains an ISUP type message. Subsequent to this encapsulation, the incoming message no longer appears or is treated as an ISUP IAM message within node **100**, but is instead processed internally as an SCCP type SS7 message.

Unless additional processing by an unrelated subsystem is required, the original ISUP IAM message is then routed to HMDC **320** where normal ISUP message type routing is resumed. However, once again, it should be appreciated that the original ISUP IAM message could be SCCP encapsulated and further processed instead of producing a copy of the ISUP message. It should also be appreciated that failure of the incoming ISUP message to meet the criteria specified for causing the original, non-encapsulated message to routed directly to HMDC **320** where normal ISUP message type to be routed directly to HMDC **320** where normal ISUP message type routing is resumed.

However, in the case where an incoming ISUP message satisfies block **408** criteria, SCCP encapsulation of the ISUP message occurs and the resulting encapsulated message is directed to HMDC **320** (block **412**), where SCCP type processing is performed. In the example shown in Figure 3, HMDC **320** examines the message and determines that the DPC and subsystem number (SSN) of the SCCP message correspond to a point code and subsystem of node **100**. Consequently, further processing of the SCCP message within node **100** is assumed to be necessary, and the message is passed to HMDT **322**. HMDT **322** examines the service indicator (SI) field of the encapsulated message, which indicates that the encapsulated message is an SCCP type. As such, HMDT **322** places the encapsulated SCCP message on bus **308** for transport to PSM **304** and subsequent presence registration / update service.

Referring to Figure 4B, in block **414**, the encapsulated SCCP message is received and examined by SCRC **324** that is resident on PSM **304**. SCRC **324** examines the message, determines that presence registration / update service is indicated, and forwards the encapsulated message to PSMG function **326** (block **416**). In block **418**, PSMG function **326** extracts the identifier information in the source address and the destination address of the SCCP envelope and determines that the ISUP message requires the generation of a SIP-formatted presence registration message (block **420**). The ISUP IAM message is subsequently directed to SIP process **328** for further processing (block **422**). SIP process **328** examines the ISUP IAM message and, using information contained within the message, generates a SIP-formatted presence registration / update message (block **424**). The SIP-formatted presence registration / update message may include call-related presence information for the presentity, such as the identifier information in the source address and the destination address.

With SIP-processing complete, the SIP-formatted presence registration / update message is passed to HMRT function **334**. HMRT function **334** determines to which DCM card the messages should be routed for subsequent outbound transmission (block **426**). In this case, the HMRT function **334** determines that the desired outbound signaling link associated with the routing of the message is located on DCM **302**. Consequently, the SIP message is internally routed across bus **308** to DCM **302**, where it is generally received by an I/O queue **336** (block **428**). Eventually, the message is passed from I/O queue **336** on to IP level 2 and level 1 functions **338** and **340**, respectively (block **430**). IP level 1 and 2 functions **340** and **338**, respectively, provide the facilities necessary to send and receive digital data over a particular physical media / physical interface, as well as to provide error detection / correction and sequenced delivery of all IP messages transmitted in IP network **118**. As indicated in block **432**, the SIP-formatted presence registration / update message is then transmitted into IP network **118** for ultimate delivery to and use by presence server **114** and presence database **116**.

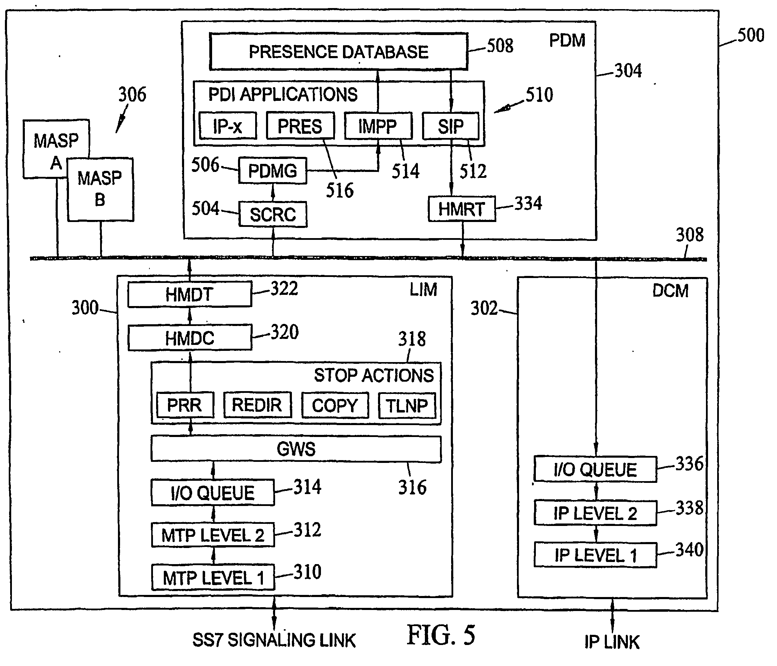

According to one embodiment, a presence database system may be resident on a network node. Figure 5 is a block diagram illustrating an exemplary internal architecture of a network node **500** having a resident presence database system according to an embodiment of the subject matter described herein. In this example, presence registration / update messages are not formulated and routed from the node, but instead presence registration / updating takes place at or within the node. That is, in the embodiment shown in Figure 5 and generally discussed below, the functionality of a presence server and presence database is generally included within node **500**.

With particular regard to the embodiment shown in Figure 5 and in a manner similar to the embodiment described above, it will be appreciated that node **500** includes IMT communications bus **318**. Communicatively coupled to IMT bus **318** are a number of distributed processing modules or cards including: MASPs **306**, an SS7 capable LIM **300**, an IP capable DCM **302**, and a presence database module (PDM) 502. These modules may be physically connected to IMT bus **318** such that signaling and other type messages may be routed internally between all active cards or modules. For simplicity of illustration, only a single LIM **300**, DCM **302**, and PDM **502** are included in Figure 5. However, it should be appreciated that the distributed, multi-processor architecture of node **500** facilitates the deployment of multiple LIM, DCM, PDM, and other cards, all of which could be simultaneously connected to IMT bus **318**. As in the previously described embodiment, MASP pair **306** implement the overall maintenance and administration subsystem functions.

In one exemplary implementation, node **500** may include SS7 and IP routing functionality as well as SS7/IP gateway functionality. For example, node **500** may be an SS7 signal transfer point, an SS7/IP gateway, and an IP router, all in a single node. In an alternate implementation, node **500** may be a stand-alone server that derives enhanced presence information from signaling messages copied from an external source, such as a network monitoring platform, stores the enhanced presence information, and delivers the presence information to subscribers. An exemplary hardware platform suitable for implementing node **500** is the TEKSERVER® Platform available from Tekelec of Morrisville, North Carolina.

In the illustrated example, LIM **300** includes a number of subcomponent processes including SS7 MTP level 1 function **310**, MTP level 2 function **312**, I/O buffer or queue **314**, GWS function **316**, SS7 MTP level 3 layer HMDC process **320**, and HMDT process **322**. MTP level 1 and 2 function **310** and **312**, respectively, provide the facilities necessary to send and receive digital data over a particular physical media / physical interface, as well as to provide error detection / correction and sequenced delivery of all SS7 messages. I/O queue **314** provides for temporary buffering of incoming and outgoing signaling messages. GWS function **316** is responsible for examining the incoming signaling messages and determining which, if any, of the provisioned stop actions are applicable is responsible for examining received messages and determining whether the messages are associated with a presentity. In response to determining that a received message is associated with a presentity, PSR stop action function **318** may generate a copy of the message and subsequently encapsulate the message within an SS7 signaling connection control part (SCCP) formatted message. It should be appreciated that PSR stop action proc function ess **318** could also be configured to simply encapsulate the original incoming signaling message, without making a copy. HMDC function **320** receives signaling messages from the lower processing layers and performs a discrimination function, effectively determining whether an incoming SS7 message requires internal processing or is simply to be through switched. For instance, in the case of an SS7 signaling message associated with a call involving a presentity or an SCCP encapsulated ISUP IAM message, HMDC function **320** would determine that the message should be internally routed for further processing. HMDT function **322** manages or directs the internal routing of SS7 messages that require additional processing prior to final routing. It should be appreciated that a LIM card may contain more functional processes than those described above. The above discussion is limited to LIM functionality associated with the basic processing of in-bound signaling messages.

In general, a PDM card includes the database and database control processes necessary to facilitate the presence registration and query handling functionality of the contemplated embodiment of the subject matter described herein. PDM **502** shown in Figure 5 includes, in part, an SCRC function **504**, a presence database manager (PDMG) process **506**, and a number of presence database interface (PDI) functions generally designated by reference numeral **508**. Including among PDI functions **508** are a SIP function **510**, an IMPP application process **512**, and a presence protocol function **514**. SCRC function **504** is responsible for discrimination of signaling messages and subsequent distribution of these signaling messages to an appropriate higher processing level application or function. In the configuration shown in Figure 5, the next highest processing level is represented by PDMG function **506**. PDMG function **506** may extract enhanced presence information, such as calling and called party identifier information, from the received message, and store the presence information for a presentity in a resident presence database **508**.

Node **500** may receive presence registration or query messages formatted in different protocols including SIP, IMPP, and the presence protocol. These messages may be received by any inbound card of node **500** and communicated to PDM **502**. PDMG function **506** is generally responsible for determining which of the provisioned protocol-specific PDI functions **510** is required to process the incoming presence registration or query message. For instance, if the incoming presence registration message contained an SCCP-encapsulated IMPP message, PDMG function **506** would determine that the provisioned PDI function **514** was required for successful provisioning. As will be appreciated from Figure 5, a number of PDI functions **510** may be simultaneously provisioned on a single PDMG card. These protocol-specific PDI functions may be configured such that each function is capable of receiving presence registration or query messages that are formatted in different protocols including, but not limited to SIP, IMPP, and the presence protocol. Furthermore, these PDI functions **510** are also capable of generating or formatting protocol-specific presence service related response messages. Such a presence service response message may include a message that provides enhanced presence information for a presentity in response to a presence status query.

Once again, while any number or variety of PDI applications may be provisioned on a single PDM card, only the IMPP, SIP, and presence protocol PDI functions **514**, **512**, and **516**, respectively, are described herein. SIP PDI function **512** essentially contains the logic necessary to process incoming SIP presence messages and construct outgoing SIP presence response messages. Similarly, IMPP PDI function **514** contains the logic necessary to process incoming IMPP formatted presence messages and construct outgoing IMPP formatted presence response messages. Presence PDI function **516** contains the logic necessary to process incoming presence query messages formatted according to the presence protocol and construct outgoing presence response messages formatted according to the presence protocol.

In one embodiment, a presence server and database system may be externally and directly connected to a network node. A presence server including a presence database may be directly connected to the network node for receiving and storing presence information about a presentity obtained from signaling message communications on the network node. Further, the presence server and database may be accessed for obtaining presence information in response to presence queries. The network node may also access the presence server and database for presence registrations. The network node and presence server and database system may be connected via Ethernet or any other suitable communication connection.

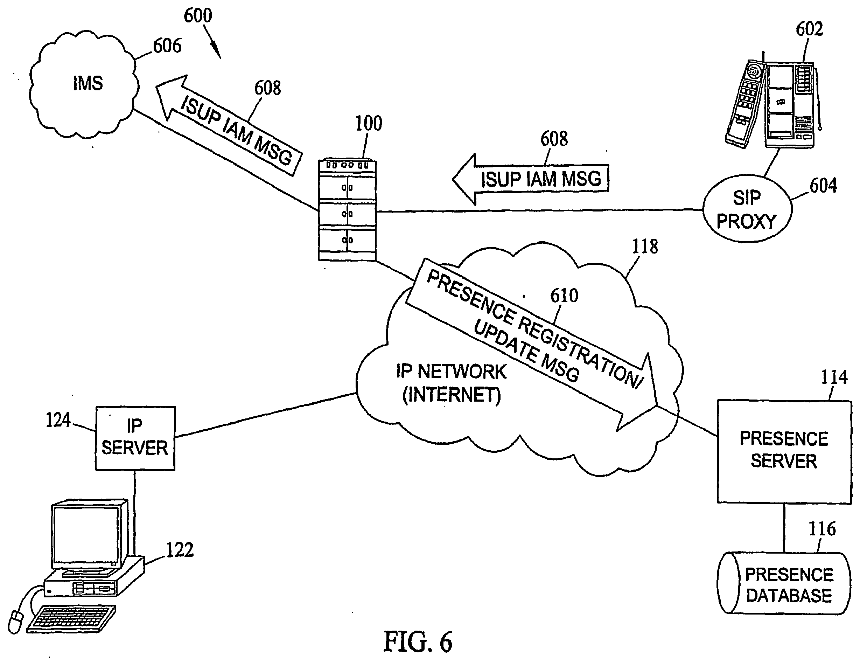

Shown in Figure 6 is a variation of the scenario illustrated in Figure 1 where a signaling message including enhanced presence information regarding parties involved in communications made to or from a presentity is comprised of an IP-type message instead of an ISUP-type message. Figure 6 illustrates an implementation of network node **100** in a wired telecommunications environment, generally indicated by the reference numeral **600**. Network **600** includes a SIP phone **602**, a SIP proxy server **604**, and an IMS network **606**. In the particular embodiment shown in Figure 6, it is assumed that a presentity operating SIP phone **602** indirectly initiates a SIP invite message **608** by dialing a phone number of another party. Those skilled in the art of SIP telecommunication networks will appreciate that generation of such SIP messages is accomplished by a SIP proxy server in response to dialing of a phone number, as generally indicated by Figure 6. As such, by dialing a phone number, the presentity operating SIP phone **602** is effectively manually registering their presence with presence server **114** and presence database **116** via the generation of SIP invite message **608**, which in turn causes the generation of a presence registration / update message **610** by node **100**. Message **610** may include a calling party identifier associated with SIP phone **602** and an identifier associated with the called party. The identifiers may be stored in presence database **116** for access by authorized subscribers.

The subject matter described herein may be implemented in a signaling transfer point (STP), a SIP / SS7 gateway, a SIP server, an IP multimedia subsystem (IMS) node, or any other suitable network node. Any of these nodes may be operable to use a presence database to deliver information regarding communications made to or from a presentity in a manner similar to the techniques described herein. A node may obtain enhanced presence information regarding parties involved in communications made to or from a presentity and store the information in a presence database that is resident on the node, locally connected to the node, or remote from the node. A subscription request may be received from a subscriber for subscribing to the presentity. In response to the subscription request, enhanced presence information may be delivered from the presence database to the subscriber.

It will be understood that various details of the subject matter described herein may be changed without departing from the scope of the subject matter described herein. Furthermore, the foregoing description is for the purpose of illustration only, and not for the purpose of limitation.

## Claims

1. A method for using a presence server (114), comprising a presence database (116), to deliver enhanced presence information regarding communications made to or from a presentity, the method comprising:
obtaining, by a network node (100), enhanced presence information including information regarding parties involved in communications made to or from a presentity, wherein the enhanced presence information includes at least one of information identifying a party with whom the presentity has or is communicating, information regarding a duration of a call with a party with whom the presentity has or is communicating, information regarding re-direction of a call involving the presentity, and information regarding forwarding of a call involving the presentity;
transmitting the obtained enhanced presence information from the network node (100) to the presence server (114) for storing in the presence database (116);
receiving, by the presence server (114), a request from a subscriber for obtaining the enhanced presence information regarding the presentity; and
in response to the request, delivering the enhanced presence information from the presence database (116) to the subscriber;
wherein obtaining the enhanced presence information includes deriving, by the network node (100), the enhanced presence information from signaling messages regarding a call involving the presentity.

2. The method of claim 1 comprising automatically communicating updates regarding the enhanced presence information to the subscriber in response to changes in the enhanced presence information.

3. The method of claim 1 wherein the enhanced presence information includes a log of calls involving the presentity.

4. The method of claim 3 wherein the log includes identifiers of parties communicating with the presentity.

5. The method of claim 1 wherein the obtaining step, the receiving step, and the delivering step are implemented in real-time.

6. A system comprising a presence server (114) and a presence database (116), for delivering enhanced presence information regarding communications made to or from a presentity, the system further comprising:
a network node (100) configured to obtain enhanced presence information regarding parties involved in communications made to or from a presentity, and configured to transmit the obtained enhanced presence information to the presence server (114) for storing in a presence database (116), wherein the enhanced presence information includes at least one of information identifying a party with whom the presentity has or is communicating, information regarding a duration of a call with a party with whom the presentity has or is communicating, information regarding re-direction of a call involving the presentity, and information regarding forwarding of a call involving the presentity; and
the presence server (114) is configured to receive a request from a subscriber for obtaining the enhanced presence information regarding the presentity and is configured to deliver the enhanced presence information from the presence database (116) to the subscriber in response to the request;
wherein the network node (100) is configured to derive the enhanced presence information from signaling messages regarding a call involving the presentity.

7. The system of claim 6 wherein the network node (100) comprises a device selected from the group consisting of an SS7 / Internet protocol routing node, a signaling transfer point, a SIP / SS7 gateway, a SIP server, and an Internet protocol multimedia subsystem node.

8. The system of claim 6 wherein the presence server (114) is configured to automatically communicate updates regarding the enhanced presence information to the subscriber in response to changes in the enhanced presence information.

9. The system of claim 6 wherein the presence database (116) is configured to store a log of calls involving the presentity.

10. The system of claim 6 wherein the presence database (116) is configured to store identifiers of parties communicating with the presentity.

11. A computer program product comprising computer executable instructions embodied in a computer readable medium for performing steps as set out in any of claims 1 to 5.

## Patentansprüche

1. Verfahren zur Verwendung eines Präsenzservers (114), der eine Präsenzdatenbank (116) umfasst, um erweiterte Präsenzinformationen in Bezug auf Kommunikationen abzuliefern, die zu oder von einer Präsentität erfolgten, wobei das Verfahren umfasst:
Erhalten, durch einen Netzwerkknoten (100), von erweiterten Präsenzinformationen, die Informationen hinsichtlich Parteien einschließen, die in Kommunikationen involviert sind, die zu oder von einer Präsentität erfolgten, wobei die erweiterten Präsenzinformationen wenigstens eine von Informationen einschließen, die eine Partei identifizieren, mit der die Präsentität kommuniziert hat oder kummuniziert, Informationen hinsichtlich einer Dauer eines Anrufs mit einer Partei, mit der die Präsentität Informationen hinsichtlich Umleitung eines Anrufs, der die Präsentität involviert und Informationen hinsichtlich Weiterleiten eines Anrufs, der die Präsentität involviert, kummuniziert hat oder kommuniziert;
Senden der erhaltenen erweiterten Präsenzinformationen vom Netzwerkknoten (100) zum Präsenzserver (114) zum Speichern in der Präsenzdatenbank (116);
Empfangen, durch den Präsenzserver (114), einer Anforderung von einem Teilnehmer zum Erlangen der erweiterten Präsenzinformationen hinsichtlich der Präsentität; und
als Reaktion auf die Anforderung, Abliefern der erweiterten Präsenzinformationen aus der Präsenzdatenbank (116) an den Teilnehmer;
wobei das Erlangen der erweiterten Präsenzinformationen das Ableiten, durch den Netzwerkknoten (100), der erweiterten Präsenzinformationen aus Signalisiernachrichten hinsichtlich eines Anrufs einschließt, der die Präsentität involviert.

2. Verfahren nach Anspruch 1, dass das automatische Kommunizieren von Updates hinsichtlich der erweiterten Präsenzinformationen an den Teilnehmer, als Reaktion auf Änderungen in den erweiterten Präsenzinformationen umfasst.

3. Verfahren nach Anspruch 1, wobei die erweiterten Präsenzinformationen ein Protokoll von Anrufen einschließt, welche die Präsentität involvieren.

4. Verfahren nach Anspruch 3, wobei das Protokoll Identifizierungsmerkmale von Parteien einschließt, die mit der Präsentität kommunizieren.

5. Verfahren nach Anspruch 1, wobei der Schritt der Erlangung, der Schritt des Empfangs und der Schritt der Ablieferung in Echtzeit implementiert werden.

6. System, das einen Präsenzserver (114) und eine Präsenzdatenbank (116) umfasst, um erweiterte Präsenzinformationen in Bezug auf Kommunikationen abzuliefern, die zu oder von einer Präsentität erfolgten, wobei das System ferner umfasst:
Einen Netzwerkknoten (100), der konfiguriert ist, erweiterte Präsenzinformationen hinsichtlich Parteien zu erlangen, die in Kommunikationen involviert sind, die zu oder von einer Präsentität erfolgten, und konfiguriert ist, die erlangten, erweiterten Präsenzinformationen an den Präsenzserver (114) zum Speichern in einer Präsenzdatenbank (116) zu senden, wobei die erweiterten Präsenzinformationen wenigstens eine von Informationen, die eine Partei identifizieren, mit der die Präsentität kommuniziert hat oder kommuniziert, Informationen hinsichtlich einer Dauer eines Anrufs mit einer Partei, mit der die Präsentität Informationen kommuniziert hat oder kommuniziert, Informationen hinsichtlich Umleitung eines Anrufs, der die Präsentität involviert, und Informationen hinsichtlich der Weiterleitung eines Anrufs, der die Präsentität involviert, einschließen; und
der Präsenzserver (114) konfiguriert ist, eine Anforderung von einem Teilnehmer zum Erlangen der erweiterten Präsenzinformationen hinsichtlich der Präsentität zu empfangen, und konfiguriert ist, die erweiterten Präsenzinformationen aus der Präsenzdatenbank (116), als Reaktion auf die Anforderung, an den Teilnehmer abzuliefern;
wobei der Netzwerkknoten (100) konfiguriert ist, die erweiterten Präsenzinformationen aus Signalisiernachrichten hinsichtlich eines Anrufs abzuleiten, der die Präsentität involviert.

7. System nach Anspruch 6, wobei der Netzwerkknoten (100) ein Bauelement umfasst, das aus der Gruppe selektiert ist, die aus einem SS7 / Internetprotokoll-Leitwegknoten, einem Signalisiertransferpunkt, einem SIP / SS7-Gateway, einem SIP, und einem Internetprotokoll-Multimedia-Subsystemknoten besteht.

8. System nach Anspruch 6, wobei der Präsenzserver (114) konfiguriert ist, automatisch Updates hinsichtlich der erweiterten Präsenzinformationen an den Teilnehmer, als Reaktion auf Änderungen in den erweiterten Präsenzinformationen, zu kommunizieren.

9. System nach Anspruch 6, wobei die Präsenzdatenbank (116) konfiguriert ist, ein Protokoll von Anrufen zu speichern, welche die Präsentität involvieren.

10. System nach Anspruch 6, wobei die Präsenzdatenbank (116) konfiguriert ist, Identifizierungsmerkmale von Parteien zu speichern, die mit der Präsentität kommunizieren.

11. Computerprogrammprodukt, das computerausführbare Befehle umfasst, die in einem computerlesbaren Medium zum Ausführen der Schritte, wie in irgendeinem der Ansprüche 1 bis 5 dargelegt, verkörpert sind.

## Revendications

1. Procédé d'utilisation d'un serveur de présence (114), comportant une base de données de présence (116), servant à fournir des informations de présence améliorées se rapportant à des communications effectuées en direction et en provenance d'une entité de présence, le procédé comportant :
l'étape consistant à obtenir, par le biais d'un noeud de réseau (100), des informations de présence améliorées comprenant des informations se rapportant à des parties impliquées dans des communications effectuées en direction et en provenance d'une entité de présence, dans lequel les informations de présence améliorées comprennent au moins des informations parmi des informations identifiant une partie avec laquelle l'entité de présence a communiqué ou communique, des informations se rapportant à une durée d'un appel avec une partie avec laquelle l'entité de présence a communiqué ou communique, des informations se rapportant à la redirection d'un appel impliquant l'entité de présence, et des informations se rapportant à un renvoi d'un appel impliquant l'entité de présence ;
l'étape consistant à transmettre les informations de présence améliorées obtenues en provenance du noeud de réseau (100) au serveur de présence (114) à des fins de stockage dans la base de données de présence (116) ;
l'étape consistant à recevoir, par le biais du serveur de présence (114), une demande en provenance d'un abonné pour obtenir les informations de présence améliorées se rapportant à l'entité de présence ; et
en réponse à la demande, fournir les informations de présence améliorées en provenance de la base de données de présence (116) à l'abonné ;
dans lequel l'étape consistant à obtenir les informations de présence améliorées comprend l'étape consistant à dériver, par le biais du noeud de réseau (100), les informations de présence améliorées en provenance de messages de signalisation se rapportant à un appel impliquant l'entité de présence.

2. Procédé selon la revendication 1, comportant l'étape consistant à communiquer automatiquement des mises à jour se rapportant aux informations de présence améliorées à l'abonné en réponse à des changements dans les informations de présence améliorées.

3. Procédé selon la revendication 1, dans lequel les informations de présence améliorées comprennent un journal des appels impliquant l'entité de présence.

4. Procédé selon la revendication 3, dans lequel le journal comprend des identifiants des parties communiquant avec l'entité de présence.

5. Procédé selon la revendication 1, dans lequel l'étape consistant à obtenir, l'étape consistant à recevoir, et l'étape consistant à fournir sont mises en oeuvre en temps réel.

6. Système comportant un serveur de présence (114) et comportant une base de données de présence (116), servant à fournir des informations de présence améliorées se rapportant à des communications effectuées en direction et en provenance d'une entité de présence, le système comportant par ailleurs :
un noeud de réseau (100) configuré pour obtenir des informations de présence améliorées se rapportant à des parties impliquées dans des communications effectuées en direction et en provenance d'une entité de présence, et configuré pour transmettre les informations de présence améliorée obtenues au serveur de présence (114) à des fins de stockage dans une base de données de présence (116), dans lequel les informations de présence améliorées comprennent au moins des informations parmi des informations identifiant une partie avec laquelle l'entité de présence a communiqué ou communique, des informations se rapportant à une durée d'un appel avec une partie avec laquelle l'entité de présence a communiqué ou communique, des informations se rapportant à la redirection d'un appel impliquant l'entité de présence,
et des informations se rapportant à un renvoi d'un appel impliquant l'entité de présence ; et
le serveur de présence (114) est configuré pour recevoir une demande en provenance d'un abonné pour obtenir les informations de présence améliorées se rapportant à l'entité de présence et est configuré pour fournir les informations de présence améliorées en provenance de la base de données de présence (116) à l'abonné en réponse à la demande ;
dans lequel le noeud de réseau (100) est configuré pour dériver les informations de présence améliorées en provenance de messages de signalisation se rapportant à un appel impliquant l'entité de présence.

7. Système selon la revendication 6, dans lequel le noeud de réseau (100) comporte un dispositif sélectionné dans le groupe constitué par un noeud de routage à protocole SS7/protocole Internet, un point de transfert sémaphore, une passerelle SIP/SS7, un serveur SIP, et un noeud de sous-système multimédia à protocole Internet.

8. Système selon la revendication 6, dans lequel le serveur de présence (114) est configuré pour communiquer automatiquement des mises à jour se rapportant aux informations de présence améliorées à l'abonné en réponse à des changements dans les informations de présence améliorées.

9. Système selon la revendication 6, dans lequel la base de données de présence (116) est configurée pour stocker un journal d'appels impliquant l'entité de présence.

10. Système selon la revendication 6, dans lequel la base de données de présence (116) est configurée pour stocker des identifiants des parties communiquant avec l'entité de présence.

11. Produit programme informatique comportant des instructions exécutables par ordinateur mises en oeuvre dans un support lisible par un ordinateur à des fins d'exécution des étapes selon l'une quelconque des revendications 1 à 5.
